# EUROPÄISCHE PATENTSCHRIFT

(11) **EP 1 582 333 B1**
(45) Veröffentlichungstag und Bekanntmachung des Hinweises auf die Patenterteilung: **08.03.2006**
(21) Anmeldenummer: 05005315.6
(22) Anmeldetag: 10.03.2005
(51) Int. Cl.: B29C 51/26, B29C 51/46

(54) **Verfahren und Vorrichtung zum Tiefziehen und Ausstanzen von Behältern aus einer thermoplastischen Kunstofffolie**
Method and apparatus for thermoforming and cutting out containers from a thermoplastic sheet
Procédé et dispositif pour le thermoformage et découpage de récipients d'une feuille thermoplastique

(30) Priorität: 13.03.2004 DE 102004012439
(43) Veröffentlichungstag der Anmeldung: 05.10.2005
(73) Patentinhaber: Adolf Illig Maschinenbau GmbH & Co. KG, 74081 Heilbronn (DE)
(72) Erfinder: Lehmann, Thomas, 74177 Bad Friedrichshall (DE)

(56) Entgegenhaltungen:
- EP-A- 0 972 627
- EP-A- 1 106 330
- DE-A1- 3 936 891
- DE-A1- 19 652 517
- US-A- 5 785 910

## Beschreibung

Die Erfindung betrifft ein Verfahren mit den Merkmalen des Oberbegriffes des Patentanspruches 1, sowie eine Vorrichtung zur Durchführung des Verfahrens.

Aus der DE 3936891 A1 ist eine Vorrichtung bekannt, die es ermöglicht, beim Herstellen von Behältern aus einer thermoplastischen Kunststofffolie eine gleichmäßige Dicke des Becherrandes zu erzielen. Dies wird dadurch erreicht, dass eine Querbrücke, an der die Niederhalter befestigt sind, sich über Stangen an der gegenüberliegenden Hälfte des Formwerkzeuges abstützt und ihr Hub definiert begrenzt wird. Nachteilig ist dabei, dass die gekühlten Niederhalter mit ihrer Stirnfläche bereits am Ende des Schließens des Formwerkzeuges an der erwärmten Kunststofffolie anliegen und diese frühzeitig abkühlen, was sich nachteilig auf den Thermoformprozess auswirkt.

Aus der DE 2 145 250 ist eine Vorrichtung zur Herstellung von Behältern aus thermoplastisch verformbaren Kunststofffolien bekannt, die einen Niederhalter aufweist, der axial verschiebbar innerhalb des Oberwerkzeugs angeordnet und mit einem Kolben versehen ist, der mit einem Druckmittel beaufschlagt wird. Der Druckmitteldruck ist durch ein zugeordnetes Steuergerät steuerbar. Da diese Vorrichtung kein Rückmeldeorgan zur Erfassung der Position der Niederhalter aufweist, verfügt sie über keine Lageregelung, sodass der Behälterrand in der Dicke größeren Toleranzen unterworfen ist.

Aus der EP 1 097 794 A1 ist ein Formwerkzeug zum Herstellen von mehrschichtigen Formteilen bekannt, welches über Möglichkeiten zur Steuerung und Programmierung der Kraft und - als Folge der Größe der Kraft - indirekt der Position der Verschlussteile verfügt. Es liegt keine Regelung der Position der Verschlussteile vor, denn es ist kein Wegmeßsystem erkennbar. Zum Bewegen der Verschlussteile werden ausschließlich Fluidzylinder eingesetzt. Durch Verändern des Druckes wird eine Positionsveränderung der Verschlussteile erzeugt, also wieder indirekt. Auch hier ist der Behälterrand größeren Dickentoleranzen unterworfen.

Aus der DE 101 48 648 A1 ist eine Vorstrecker-Antriebseinrichtung bekannt, die einen Servomotor umfasst, dem eine externe Haltebremse zugeordnet ist. Die Haltebremse wird dazu verwendet, die beim Thermoformen gegen die Vorstrecker wirkenden Reaktionskräfte, bedingt durch die Formluft, zu kompensieren. Der Servomotor wird im Wesentlichen sowohl durch die Haltebremse als auch durch die Betriebsbremse in der Sollposition gehalten. Die Lageregelung der Streckhelfer wirkt jeweils nur auf die beiden Endlagen oben und unten und nicht auf Zwischenstellungen. Eine Momentenregelung ist nicht vorgesehen.

Weiterhin ist es aus der EP 1 106 330 B1 bekannt, den Gegenhalter, an dem die Niederhalter vorgespannt anliegen, mittels eines Antriebes zu bewegen, der mechanisch, elektromagnetisch, pneumatisch oder hydraulisch ausgebildet sein kann. Beim Schließen des Formwerkzeuges ist die Stimfläche des Niederhalters von der Kunststofffolie zunächst entfernt und kühlt diese nicht vorzeitig ab. Beim Beginn des Verformungsprozesses bewegt sich der Gegenhalter, vorzugsweise synchronisiert zur Bewegung des Streckhelfers, so dass die Stirnfläche des Niederhalters mit ihrer Vorspannkraft auf der Kunststofffolie aufliegt und den Behälterrand formt. Auf die weiteren Bewegungsabläufe des Niederhalters während des Ausstanzens der Behälter - dies wird durch einen geringen Aufwärtshub des Unterteils erreicht - und zum Ausschieben der ausgestanzten Behälter aus der Matrize ist nicht näher eingegangen. Es muss deshalb diesbezüglich vom bekannten Stand der Technik ausgegangen werden. Dieser besteht darin, dass beim Ausstanzen der Schnittstempel den Niederhalter synchron unter Überwindung von dessen Vorspannkraft verschiebt und der Niederhalter beim Öffnen des Formwerkzeuges den Behälter mit seiner Vorspannkraft aus der Matrize ausschiebt. Dies bedeutet dann aber zwangsläufig, dass der Gegenhalter den Niederhalter so weit freigeben muss, dass dieser einen Hub bis zur bündigen Lage mit der Unterkante der Matrize ausführen kann.

Ein Nachteil dieses beschriebenen und durch den Stand der Technik unterstellten Verfahrens ist es, dass bereits zu Beginn des Tiefziehverfahrens die volle Vorspannkraft auf den den Behälterrand bildenden Bereich der Kunststofffolie einwirkt, bevor ein Verstrecken der Kunststofffolie stattfindet. Folge ist ein Quetschen von Folienmaterial nach innen, wodurch sich ein Wulst bildet. Dieser kann, da er durch den hohen Anpressdruck rasch abkühlt, beim Tiefziehen nicht mehr vollständig verstreckt werden und bleibt mehr oder weniger dick erhalten.

Dies stört beim Entstapeln der Behälter in Füllmaschinen durch Verklemmen der Behälter. Da die Kunststofffolie Dickentoleranzen aufweist, ist die Wulstgröße auch von diesen Toleranzen abhängig und schwankt deshalb. Diese Dickentoleranzen der Kunststofffolie führen zudem zu Toleranzen der Dicke des geformten Behälterrandes, da sich diese Dicke allein als Folge der Vorspannkraft ergibt. Die Dicke des Behälterrandes wird außerdem wesentlich beeinflusst von der Folientemperatur und bereits geringe Temperaturdifferenzen der Kunststofffolie führen zu Toleranzen der Dicke des Behälterrandes, weil das Kunststoffmaterial unterschiedlich fließt. Schließlich ist auch die Vorspannkraft selbst gewissen Toleranzen - je nach Erzeugung - unterworfen und diese wirken sich ebenfalls auf die Dicke des Behälterrandes aus. Insgesamt führen also drei wesentliche Einflussfaktoren dazu, dass die Dicke des Behälterrandes großen Toleranzen unterworfen ist.
Es hat sich ferner gezeigt, dass auch die beim Ausstanzen durch den Schnittstempel auf den Behälterrand einwirkende Kraft eine Veränderung der Dicke des Behälterrandes hervorrufen kann. Diese Kraft besteht einerseits aus der Vorspannkraft des Niederhalters, die überwunden werden muss. Ferner entsteht eine Massenkraft, da der Niederhalter zurückgeschoben werden muss und folglich eine sehr rasche Beschleunigung des Niederhalters erfolgt. Würde man den Niederhalter vor dem Stanzen zurückziehen würde keine Anlage seiner Stimfläche und damit kein optimales Kühlen des Behälterrandes vorliegen. Selbst wenn man die Vorspannkraft auf eine nicht beschriebene Weise reduzieren oder aufheben würde wäre die durch die Beschleunigung entstehende Massenkraft immer noch zu überwinden.
Es lassen sich weder durch eine zeitliche Verzögerung des Startpunktes der Niederhalterbewegung, noch durch eine Variation der Vorspannkraft des Niederhalters unter Verwendung der in der EP 1 106 330 B1 erwähnten Antriebe Behälter höchster Qualität bezüglich der Dicke des Behälterrandes erzeugen.

Der Erfindung liegt die Aufgabe zugrunde, die geschilderten Nachteile des Standes der Technik zu überwinden und das Verfahren zum Tiefziehen der Behälter so durchzuführen, dass Behälter ohne Wulstbildung und mit einer definierten Randdicke mit sehr geringen Dickentoleranzen produziert werden können, wobei die Behälterränder optimal gekühlt werden, sowie die Vorrichtung zum Tiefziehen und Ausstanzen von Behältern dahingehend auszubilden, dass die Lage des Niederhalters und die von ihm auf den Behälterrand ausgeübten Kräfte in Relation zur Vorstrecker- und Werkzeugunterteilbewegung so eingestellt werden können, wie sie für die Produktion von Behältern mit diesen Eigenschaften erforderlich sind.

Gelöst ist diese Aufgabe durch die im Kennzeichen des Hauptanspruchs angegebenen Maßnahmen sowie durch eine Vorrichtung mit den Merkmalen des Anspruches 6. Die Unteransprüche stellen vorteilhafte Weiterbildungen dar.

Ein Ausführungsbeispiel der Vorrichtung und das Verfahren sind anhand der schematischen Zeichnung näher beschrieben. Es zeigen:
- Fig.1: Einen Querschnitt durch ein Formwerkzeug in gerade geschlossenem Zustand.
- Fig. 2: Einen vergrößerten Ausschnitt des Formwerkzeuges im Stanzbereich nach dessen Schließen.
- Fig. 3: Einen vergrößerten Ausschnitt des Formwerkzeuges vor dem Beginn der mechanischen Verstreckung durch den Streckhelfer.
- Fig. 4: Einen vergrößerten Ausschnitt des Formwerkzeuges nach dem Beginn der mechanischen Verstreckung durch den Streckhelfer.
- Fig. 5: Einen vergrößerten Ausschnitt des Formwerkzeuges nach der Verformung der Kunststofffolie.
- Fig. 6: Einen vergrößerten Ausschnitt des Formwerkzeuges nach dem Ausstanzen des Behälters.
- Fig. 7: Einen vergrößerten Ausschnitt des Formwerkzeuges nach dem Ausschieben des Behälters aus der Matrize.

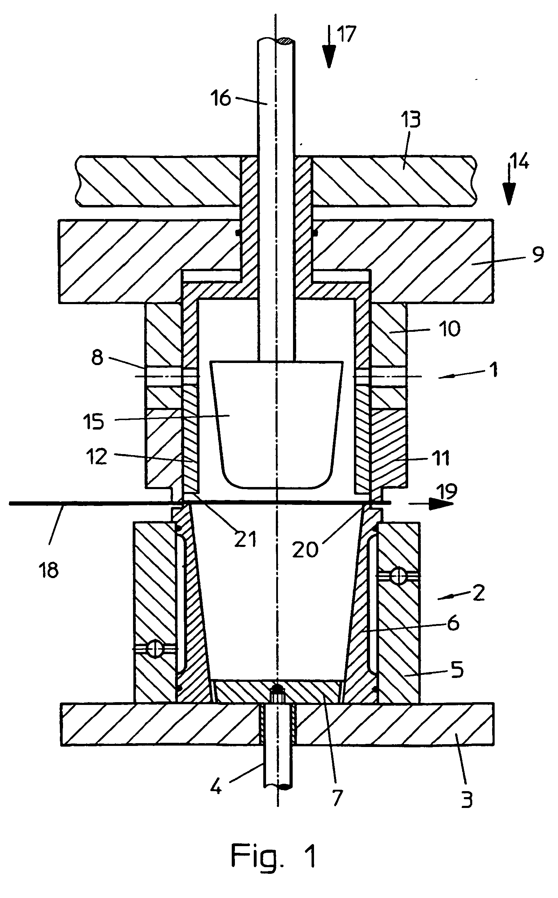

In Fig. 1 ist ein Schnitt durch ein Formwerkzeug dargestellt. Das Formwerkzeug besteht aus Oberteil 1 und Unterteil 2, die zueinander verschiebbar sind. Dabei setzt sich das Unterteil 2 aus der Grundplatte 3, einer Aufnahmeplatte 5 für die Schnittstempel 6, die die Form der herzustellenden Behälter 22 aufweisen und Böden 7 zusammen, die an verschiebbaren Stangen 4 sitzen. Das Oberteil 1 weist eine Kopfplatte 9 auf, die eine Zwischenplatte 10 trägt. An dieser ist eine Matrize 11 befestigt. Zwischenplatte 10 und Matrize 11 weisen zum einen Bohrungen zur Aufnahme von je einem Niederhalter 12 entsprechend der Nestzahl des Formwerkzeuges auf als auch Bohrungen 8 zur Einleitung von Druckluft in den Innenraum zur pneumatischen Verformung der Kunststofffolie 18. Die oberen Enden der Niederhalter 12 sind an einer Sammelplatte 13 befestigt, ragen durch die Kopfplatte 9 und sind in dieser verschiebbar geführt. Die Sammelplatte 13 wird durch einen als Pfeil dargestellten Antrieb 14 bewegt. In jeder Bohrung im Niederhalter 12 ist ein Streckhelfer 15 über Stangen 16 durch den als Pfeil dargestellten Antrieb 17 verschiebbar angeordnet.

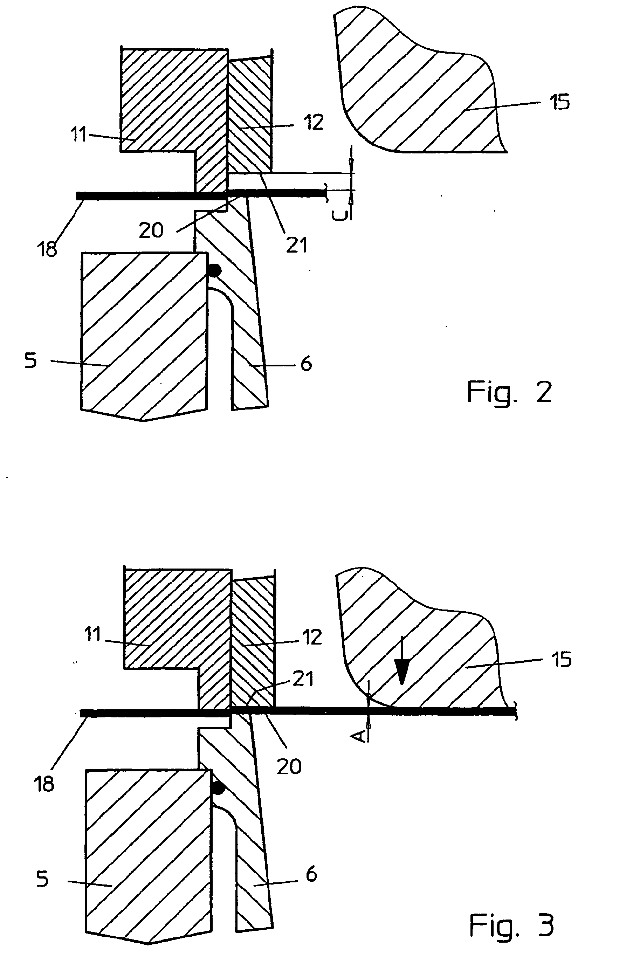

Der Verformungsprozess beginnt, indem ein Abschnitt einer erwärmten Kunststofffolie 18 bei geöffnetem Formwerkzeug durch den als Pfeil 19 dargestellten Transport zwischen Oberteil 1 und Unterteil 2 gebracht wird. Beim Schließen des Formwerkzeuges durch Anheben des Unterteils 2 ist die Stirnfläche 21 des gekühlten Niederhalters 12 von der erhitzten Kunststofffolie 18 um das Maß C entfernt positioniert und kühlt diese nicht ab. Dabei wird jeder Schnittstempel 6 soweit gegen die Matrize 11 gefahren, dass die Oberkante der Schnittstempel 6 an der Unterseite der Kunststofffolie 18 anliegt und ein teilweises Durchschneiden der Kunststofffolie 18 erfolgt. (Fig. 2).

Beim Absenken des Streckhelfers 15 auf die Kunststofffolie 18 wird auch der Niederhalter 12 auf die Kunststofffolie 18 kraftgeregelt bzw. momentengeregelt abgesenkt, so dass über seine Stirnfläche 21 eine bestimmte, einstellbare Klemmkraft auf die Kunststofffolie 18 aufgebracht wird, bevor der Verstreckungsprozess beginnt (Fig.3). Erreicht wird dies durch den Antrieb 14, der eine Kraft- bzw. Momentenregelung und eine Lageregelung ermöglicht. Durch diese kraft- bzw. momentengeregelte Einspannung der Kunststofffolie 18 wird erreicht, dass zum einen die Kunststofffolie 18 während des ersten Teiles des Tiefziehprozesses niedergehalten wird und zum anderen, dass aus diesem ringförmigen Folienbereich einerseits nicht soviel Kunststoffmaterial herausgequetscht wird, dass sich ein Wulst bildet, der sich dann nicht mehr verstrecken lässt, andererseits der Streckhelfer 15 während seiner Abwärtsbewegung Folienmaterial herausziehen und zum Formen des Behälters 22 mit verwenden kann.

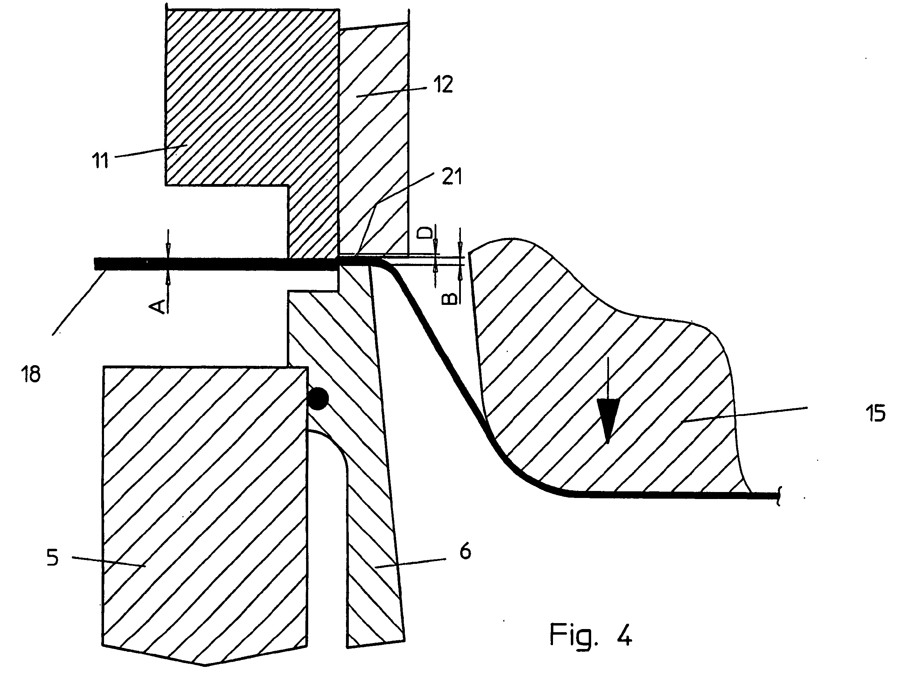

Nach einer bestimmten Teilstrecke der Bewegung des Streckhelfers 15 wird der Niederhalter 12 um eine weitere kleine Strecke - Hub D - lagegeregelt abgesenkt, so dass die Kunststofffolie 18 und damit der Behälterrand 20 maßgenau auf eine gewünschte Dicke B, die dünner ist als die Ausgangsdicke A, kalibriert wird (Fig. 4).

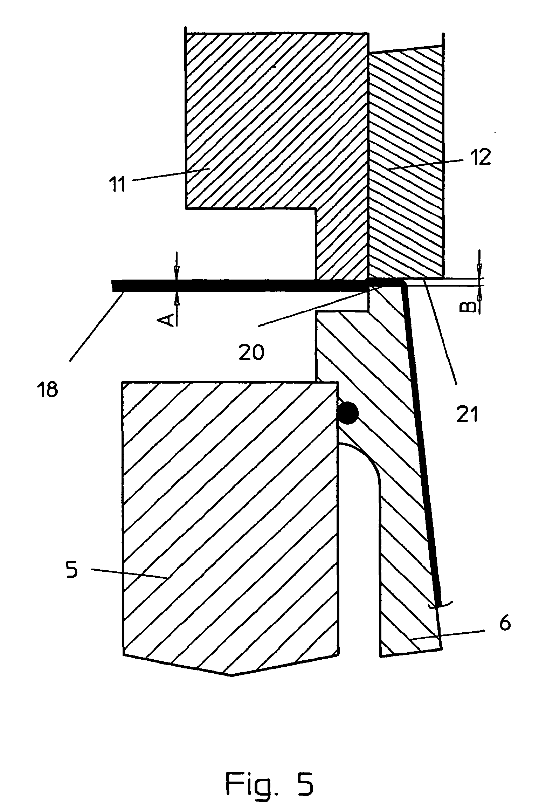

Während des weiteren Verformungsvorganges bleibt die Stimfläche 21 des Niederhalters 12 lagegeregelt in dieser Position und kühlt bzw. kalibriert den Behälterrand 20 (Fig. 5).

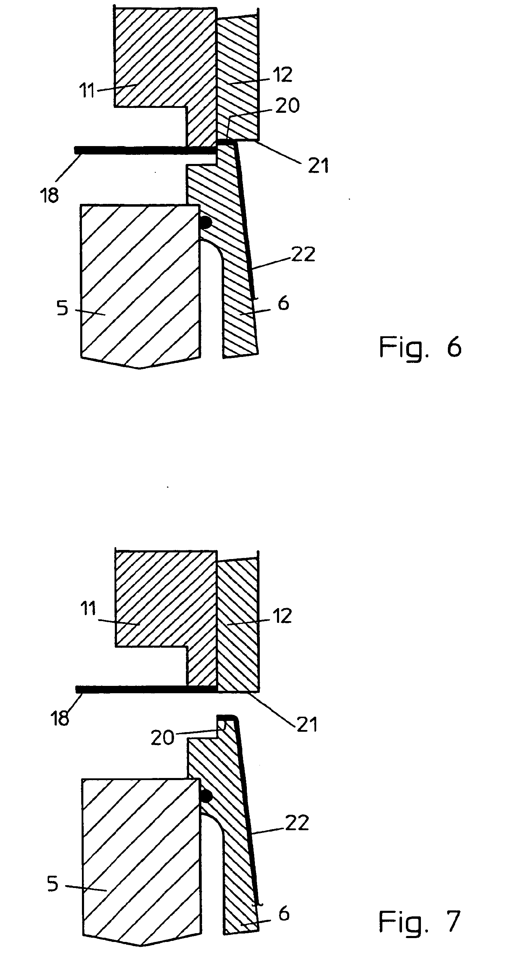

Nach Beendigung des Verformungsvorganges wird der Niederhalter 12 während des Stanzvorganges in Weiterbildung der Erfindung kraft- bzw. momentengeregelt oder lagegeregelt synchron zum Unterteil 2 mittels des Antriebes 14 verschoben, so dass der Behälter 22 von der Kunststofffolie 18 durch den Schnittstempel 6 abgetrennt und dabei von der Stimfläche 21 des Niederhalters 12 weiterhin berührt wird. So kann der Kontakt mit dem gekühlten Niederhalter 12 dazu genutzt werden, den Behälterrand 21 möglichst lange wirksam zu kühlen (Fig. 6) unter Vermeidung einer zusätzlichen Kraft auf den Behälterrand, hervorgerufen durch die Beschleunigung des Niederhalters.

Nach Beendigung des Stanzvorganges wird die Position des Niederhalters 12 abgesenkt (Fig.7) und unterstützt damit das Herauslösen des Behälters 22 aus der Kunststofffolie 18. Auch hier wird in Weiterbildung der Erfindung vorgeschlagen, den Niederhalter 12 mittels des Antriebes 14 lagegeregelt synchron mit dem Unterteil 2 bis zur Unterkante der Matrize 11 zu bewegen, um eine Einspannung des Behälterrandes 21 und damit eine gute Kühlung während des Ausschiebevorgangs zu gewährleisten.

Durch den Einsatz eines Antriebes 14 mit einem geschlossenen Regelkreis zum Bewegen des Niederhalter 12, der durch eine übergeordnete Steuerung sowohl mit dem servomotorischen Antrieb 17 des Streckhelfers 12 als auch mit dem servomotorischen Antrieb des das Unterteil 2 bewegenden Werkzeugtisches kommuniziert, ist eine Optimierung des Verfahrens möglich zum Erzielen eines exakt kalibrierten Behälterrandes 20 bei Vermeidung einer Wulstbildung am Übergang vom Behälterrand 20 zur Seitenwand des Behälters 22.
Der Antrieb 14 des Niederhalters 12 verfügt deshalb sowohl über eine Kraft- bzw. Momentenregelung als auch über eine Lageregelung. Die Klemmkraft des Niederhalters 12 auf die zwischen seiner Stimfläche 21 und dem Schnittstempel 6 eingespannte Kunststofffolie 18 zu Beginn des Verfahrens wird kraft- bzw. momentengeregelt vorgegeben. Bei einer Lageregelung bei diesem Verfahrensschritt bestünde das Problem, dass es bei Dickenschwankungen der Kunststofffolie 18 entweder zu einer Wulstbildung kommt oder - bei Minustoleranzen - keine Anlage der Stimfläche 21 gegeben ist. Die Kalibrierung des Behälterrandes 21 auf seine Randdicke B wird lagegeregelt vorgenommen, um so die oben genannten Dickenschwankungen, Temperaturunterschiede der Kunststofffolie 18 und Toleranzen der Vorspannkraft auszugleichen und alle Behälterränder 21 im Formwerkzeug auf exakt die gleiche Randdicke B zu bringen. Beim Ausstanzen und Ausschieben der Behälter 22 wird der Behälterrand 20 immer gekühlt und die Klemmkraft so eingestellt, dass keine Verformung des Behälterrandes 20 eintritt
Die Anpresskraft des Niederhalters 12 sowie der Zeitpunkt seines Absenkens sind Größen, die in Abhängigkeit von der Art und Stärke der jeweils eingesetzten Kunststofffolie 18 und der Geometrie des gewünschten Behälters 22 stehen. Die Ermittlung dieser spezifischen Parameter bedarf eines gewissen experimentellen Aufwandes, die Steuerung muss die Möglichkeit bieten, diese ermittelten Parameter abzuspeichem und die Thermoformmaschine reproduzierbar gemäß dieser Parameter zu betreiben. Das diffizile Zusammenspiel von optimalen Zeitpunkten, Geschwindigkeiten und Kräften ist nur unter Verwendung eines Antriebes mit geschlossenem Regelkreislauf, z.B. eines Servomotors zu erreichen, der in oben genannter Weise mit den anderen servomotorischen Antrieben für Unterteil 2 und ggf. Streckhelfer 15 kommunizieren kann. Vorteilhafte Ausbildungen des Antriebes 14 können deshalb außer Servomotoren auch Servolinearmotoren oder Servopiezolinearmotoren sein. Weiterhin lassen sich für dieses Verfahren auch geregelte fluide Antriebe wie servopneumatische oder servohydraulische Antriebe einsetzen.

## Patentansprüche

1. Verfahren zum Tiefziehen und Ausstanzen von Behältern (22) aus einer erwärmten thermoplastischen Kunststofffolie (18) in der Formstation einer Thermoformmaschine durch Druckluft und mechanische Vorstreckung mittels eines Formwerkzeuges, das mindestens einen in einer Matrize (11) verschiebbaren Niederhalter (12) und einen darin angeordneten, separat zu diesem verschiebbaren Streckhelfer (15) aufweist, wobei die Stimfläche (21) des Niederhalters (12) so angeordnet ist, dass sie nach dem Schließen des Formwerkzeuges die Kunststofffolie (18) zunächst nicht berührt, dann in Kontakt mit der Kunststofffolie (18) gebracht, beim Stanzvorgang synchron mit dem Schnittstempel (6) zurückgeschoben, nach Beendigung des Stanzvorganges in Richtung der Matrizenunterkante vorgeschoben und danach wieder in ihre Ausgangslage zurückgeschoben wird, **dadurch gekennzeichnet, dass** der Niederhalter (12) vor dem Auftreffen des Streckhelfers (15) auf die Kunststofffolie (18) mit einer ersten Bewegung um einen Hub (C) verschoben wird, bis seine Stimfläche (21) mit einer geringen kraft- bzw. momentengeregelten Vorspannkraft auf der Kunststofffolie (18) anliegt, danach der Streckhelfer (15) verschoben und nach einem Teil seines Verschiebeweges der Niederhalter (12) um einen zweiten Hub (D) lagegeregelt verschoben und dabei der Behälterrand (20) mit der vorgegebenen Randdicke (B) geformt wird.

2. Verfahren nach Anspruch 1, **dadurch gekennzeichnet, dass** der Niederhalter (12) während des Ausstanzens des Behälters (22) durch seinen Antrieb (14) synchron zur Bewegung des Schnittstempels (6) lagegeregelt verschoben wird.

3. Verfahren nach Anspruch 1, **dadurch gekennzeichnet, dass** der Niederhalter (12) während des Ausstanzens des Behälters (22) durch seinen Antrieb (14) synchron zur Bewegung des Schnittstempels (6) kraft- bzw. momentengeregelt verschoben wird.

4. Verfahren nach einem der Ansprüche 1 bis 3, **dadurch gekennzeichnet, dass** der Niederhalter (12) während des Ausschiebens des Behälters (22) aus der Matrize (11) durch seinen Antrieb (14) synchron zur Bewegung des Schnittstempels (6) bis zur Unterkante der Matrize (11) lagegeregelt verschoben wird.

5. Verfahren nach einem der Ansprüche 1 bis 3, **dadurch gekennzeichnet, dass** der Niederhalter (12) während des Ausschiebens des Behälters (22) aus der Matrize (11) durch seinen Antrieb (14) synchron zur Bewegung des Schnittstempels (6) bis zur Unterkante der Matrize (11) kraft- bzw. momentengeregelt verschoben wird.

6. Vorrichtung zum Tiefziehen und Ausstanzen von Behältern (22) aus einer erwärmten thermoplastischen Kunststofffolie (18), mit einer Formstation mit zwei Tischen, von denen mindestens einer verschiebbar ist und die das Oberteil (1) und das Unterteil (2) eines Formwerkzeuges tragen, wobei das Oberteil (1) mindestens einen in einer Matrize (11) über einen Antrieb (14) verschiebbaren Niederhalter (12) und einen darin angeordneten, separat zu diesem verschiebbaren Streckhelfer (15) aufweist, **dadurch gekennzeichnet, dass** der Antrieb (14) des Niederhalters (12) mit einem geschlossenen Regelkreis für eine Lage- und eine kraft-bzw. Momentenregelung versehen und mit einer Steuerung verbunden ist, die auch mit dem Antrieb des Streckhelfers (12) und dem Antrieb des bewegten Werkzeugtisches kommuniziert.

7. Vorrichtung nach Anspruch 6, **dadurch gekennzeichnet, dass** der Antrieb (14) des Niederhalters (12) als Servomotor ausgebildet ist.

8. Vorrichtung nach Anspruch 6, **dadurch gekennzeichnet, dass** der Antrieb (14) des Niederhalters (12) als Servolinearmotor ausgebildet ist.

9. Vorrichtung nach Anspruch 6, **dadurch gekennzeichnet, dass** der Antrieb (14) des Niederhalters (12) als Servopiezolinearmotor ausgebildet ist.

10. Vorrichtung nach Anspruch 6, **dadurch gekennzeichnet, dass** der Antrieb (14) des Niederhalters (12) servohydraulisch oder servopneumatisch ausgebildet ist.

## Claims

1. A method for deep-drawing and stamping out receptacles (22) from a heated thermoplastic plastic film (18) in the moulding area of a thermoforming machine with compressed air and mechanical preforming via a forming tool that includes at least one holding-down device (12) that is movable in a matrix (11) and a stretching aid (15) arranged therein and movable independently thereof, wherein the frontal face (21) of the holding-down device (12) is arranged such that it does not touch the plastic film (18) initially after the forming tool is closed, is then brought into contact with the plastic film (18), pushed back synchronously with the blanking punch (6) during the punching operation, pushed forwards towards the underside of the matrix and then back into its starting position again when the punching operation is completed, **characterized in that** before the stretching aid (15) contacts the plastic film (18) the holding-down device (12) is displaced in a first motion by a stroke (C) until its frontal face (21) lies flush on the plastic film (18) with a low, force or moment-regulated prestressing force, then the stretching aid (15) is displaced and after fraction of its displacement path the holding-down device (12) is displaced in position-controlled manner by a second stroke (D) and at the same time the receptacle edge (20) is formed with the specified edge thickness (B).

2. The method according to claim 1, **characterized in that** the holding-down device (12) is displaced by its drive unit (14) in position-controlled manner synchronously with the movement of the blanking punch (6) as the receptacle (22) is punched out.

3. The method according to claim 1, **characterized in that** the holding-down device (12) is displaced by its drive unit (14) in force- and moment-controlled manner synchronously with the movement of the blanking punch (6) as the receptacle (22) is punched out.

4. The method according to any of claims 1 to 3, **characterized in that** the holding-down device (12) is displaced as far as the underside of the matrix (11) by its drive unit (14) in position-controlled manner synchronously with the movement of the blanking punch (6) while the receptacle (22) is being ejected from the matrix (11).

5. The method according to any of claims 1 to 3, **characterized in that** the holding-down device (12) is displaced as far as the underside of the matrix (11) by its drive unit (14) in force- and moment-controlled manner synchronously with the movement of the blanking punch (6) while the receptacle (22) is being ejected from the matrix (11).

6. A device for deep-drawing and stamping out receptacles (22) from a heated thermoplastic plastic film (18), including a moulding area with two tables, of which at least one is displaceable, and which support the upper part (1) and the lower part (2) of a forming tool, wherein the upper part (1) includes at least one holding-down device (12) that is movable in a matrix (11) via a drive (14), and a stretching aid (15) that is arranged therein and movable independently thereof, **characterized in that** the drive (14) of the holding-down device (12) is equipped with a closed control circuit for positional and for force- and/or moment-controlled regulation and is connected to a controller that also communicates with the drive of the holding-down device (12) and the drive of the movable tool table.

7. The device according to claim 6, **characterized in that** the drive (14) of the holding-down device (12) has the form of a servomotor.

8. The device according to claim 6, **characterized in that** the drive (14) of the holding-down device (12) has the form of a linear servomotor.

9. The device according to claim 6, **characterized in that** the drive (14) of the holding-down device (12) has the form of a piezolinear servomotor.

10. The device according to claim 6, **characterized in that** the drive (14) of the holding-down device (12) is of a servohydraulic or servopneumatic type.

## Revendications

1. Procédé d'emboutissage et d'estampage de récipients (22) dans un film de matière thermoplastique chauffée (18) dans le poste de moulage d'une machine de thermoformage par air comprimé et étirement mécanique au moyen d'un outillage de moulage qui présente au moins un serre-flan (12) déplaçable dans une matrice (11) et un auxiliaire d'étirement (15) disposé dedans et déplaçable séparément dudit serre-flan, la surface frontale (21) du serre-flan (12) étant disposée de manière à ce qu'après fermeture de l'outillage de moulage, elle ne touche d'abord pas le film en matière plastique (18), à ce qu'elle soit ensuite mise en contact avec le film en matière plastique (18), soit reculée lors de l'opération d'estampage de manière synchrone avec le poinçon d'ébavurage (6), avancée après la fin de l'opération d'estampage en direction du bord inférieur de la matrice, puis reculée à nouveau vers sa position initiale, **caractérisé en ce que** le serre-flan (12), avant de rencontrer l'auxiliaire d'étirement (15), est déplacé vers le film en matière plastique (18) par un premier mouvement à raison d'une course (C) jusqu'à ce que sa surface frontale (21) soit en contact avec une force de précontrainte à force ou à couple régulé avec le film en matière plastique (18), que l'auxiliaire d'étirement (15) est ensuite déplacé et qu'après une partie de sa course de déplacement, le serre-flan (12) est déplacé à raison d'une deuxième course (D) avec réglage de position (20) et que le bord du récipient (20) est alors formé avec l'épaisseur de bord prédéfinie (B).

2. Procédé selon la revendication 1, **caractérisé en ce que** le serre-flan (12) est déplacé avec réglage de position pendant l'estampage du récipient (22) par sa propulsion (14) de manière synchrone avec le mouvement du poinçon d'ébavurage (6).

3. Procédé selon la revendication 1, **caractérisé en ce que** le serre-flan (12), pendant l'estampage du récipient (22), est déplacé avec réglage de force ou de couple par sa propulsion (14) de manière synchrone avec le mouvement du poinçon d'ébavurage (6).

4. Procédé selon une des revendications 1 à 3, **caractérisé en ce que** le serre-flan (12), pendant que le récipient (22) sort de la matrice (11), est déplacé avec réglage de position par sa propulsion (14) de manière synchrone avec le mouvement du poinçon d'ébavurage (6) jusqu'au bord inférieur de la matrice (11).

5. Procédé selon une des revendications 1 à 3, **caractérisé en ce que** le serre-flan (12), pendant que le récipient (22) sort de la matrice (11), est déplacé avec réglage de force ou de couple par sa propulsion (14) de manière synchrone avec le mouvement du poinçon d'ébavurage (6) jusqu'au bord inférieur de la matrice (11).

6. Procédé d'emboutissage et d'estampage de récipients (22) dans un film de matière thermoplastique chauffée (18), comprenant un poste de moulage à deux tables, dont au moins une est déplaçable, et qui supportent la partie supérieure (1) et la partie inférieure (2) d'un outillage de moulage, la partie supérieure (1) présentant au moins un serre-flan (12) déplaçable dans une matrice (11) au moyen d'une propulsion (14) et un auxiliaire d'étirement (15) disposé dedans et déplaçable séparément dudit serre-flan, **caractérisé en ce que** la propulsion (14) du serre-flan (12) est équipée d'une boucle de réglage fermée pour un réglage de position et de force ou de couple, qui communique aussi avec la propulsion de l'auxiliaire d'étirement (12) et la propulsion de la table d'outillage déplacée.

7. Dispositif selon la revendication 6, **caractérisé en ce que** la commande (14) du serre-flan (12) est réalisée sous forme d'un servomoteur.

8. Dispositif selon la revendication 6, **caractérisé en ce que** la commande (14) du serre-flan (12) est réalisée sous forme d'un moteur servolinéaire.

9. Dispositif selon la revendication 6, **caractérisé en ce que** la commande (14) du serre-flan (12) est réalisée sous forme d'un moteur servopiézolinéaire.

10. Dispositif selon la revendication 6, **caractérisé en ce que** la commande (14) du serre-flan (12) est réalisée suivant un type servohydraulique ou servopneumatique.
